# EUROPEAN PATENT APPLICATION

(11) **EP 2 541 088 A1**
(43) Date of publication of application: **02.01.2013**
(21) Application number: 11747327.2
(22) Date of filing: 22.02.2011
(51) Int. Cl.: F16C 41/00, F16C 19/06, F16C 33/78

(54) **BALL BEARING EQUIPPED WITH ENCODER FOR DETECTING ROTATIONAL SPEED OF WHEEL OF TWO-WHEELED MOTOR VEHICLE, AND DEVICE FOR DETECTING ROTATIONAL SPEED OF WHEEL OF TWO-WHEELED MOTOR VEHICLE, THE DEVICE USING THE BALL BEARING**

(30) Priority: 17.02.2011 JP 2011031849; 17.02.2011 JP 2011032002; 26.05.2010 JP 2010120368; 23.02.2010 JP 2010037041
(71) Applicant: NSK Ltd., Tokyo 141-8560 (JP)
(72) Inventor: KAKUDA, Kouichi, Fujisawa-shi Kanagawa 251-8501 (JP); YAJIMA, Hirokazu, Fujisawa-shi Kanagawa 251-8501 (JP); KIKUCHI, Aya, Fujisawa-shi Kanagawa 251-8501 (JP); FUJIOKA, Takashi, Fujisawa-shi Kanagawa 251-8501 (JP)
(74) Representative: Klingseisen, Franz
(86) International application number: PCT/JP2011/053830
(87) International publication number: WO 2011/105366

(57) **Abstract**

Construction of a ball bearing with encoder is achieved that supports a wheel of a motorcycle such that the wheel can rotate freely, makes it possible to detect the rotational speed of the wheel, and sufficiently prevents foreign matter from getting inside the internal space of the bearing. The opening on the end section of the internal space 19 of the bearing is covered by a combined seal ring 20 that comprises a slinger 21 and a seal ring 22 A ring-shaped encoder 9a is mounted on and fastened to the outside surface of an outside ring section 24 of the slinger 21. The detecting section of a sensor 30 is faced toward the outside surface of the encoder 9a and can detect the rotational speed of a wheel that rotates together with the outer ring 11a.

## Description

### BACKGROUND OF THE INVENTION

### [Field of the Invention]

The present invention relates to a ball bearing with a rotational speed detection encoder for a motorcycle wheel that supports a wheel of motorcycles (two-wheeled motor vehicles) such as standard motorcycles and scooters such that the wheel rotates freely with respect to a frame thereof, and that is used for finding the rotational speed of the wheel

### [Description of the Related Art]

Anti-lock brake systems (ABS) are widely used as a device for stabilizing the traveling state of an automobile. Use of such an ABS has mainly been centered on four-wheeled motor vehicles, however, in recent years, such systems have begun to be used in two-wheeled motor vehicles as well As is well known, in order for ABS control it is necessary to find the rotational speed of the wheel, so conventionally installing a rotational speed detection device in a wheel-supporting ball bearing unit for allowing a wheel to be supported by the suspension such that the wheel rotates freely is widely performed

However, a wheel-supporting ball bearing for a two-wheeled motor vehicle is rather compact when compared with a wheel-supporting ball bearing for a four-wheeled motor vehicle, and whereas many wheel-supporting ball bearings for four-wheeled motor vehicles are inner-race rotating type, many of the wheel-supporting ball beatings for two-wheeled motor vehicles are outer-race rotating type, and for that reason the construction of a rotational speed detection device for a four-wheeled motor vehicle cannot be applied as for use in a two-wheeled motor vehicle.

Ball bearings with an encoder for detecting the rotational speed of a motorcycle for controlling the ABS for this motorcycle are known, such as disclosed in JP2006-105341(A), JP2007-139075(A), JP2007-211840(A), JP2007-285514(A) and JP2009-229157(A) The construction of a wheel-supporting unit of a motorcycle and construction of a ball bearing with encoder disclosed in JP2007-285514(A) is explained with reference to FIG. 16 to FIG 19.

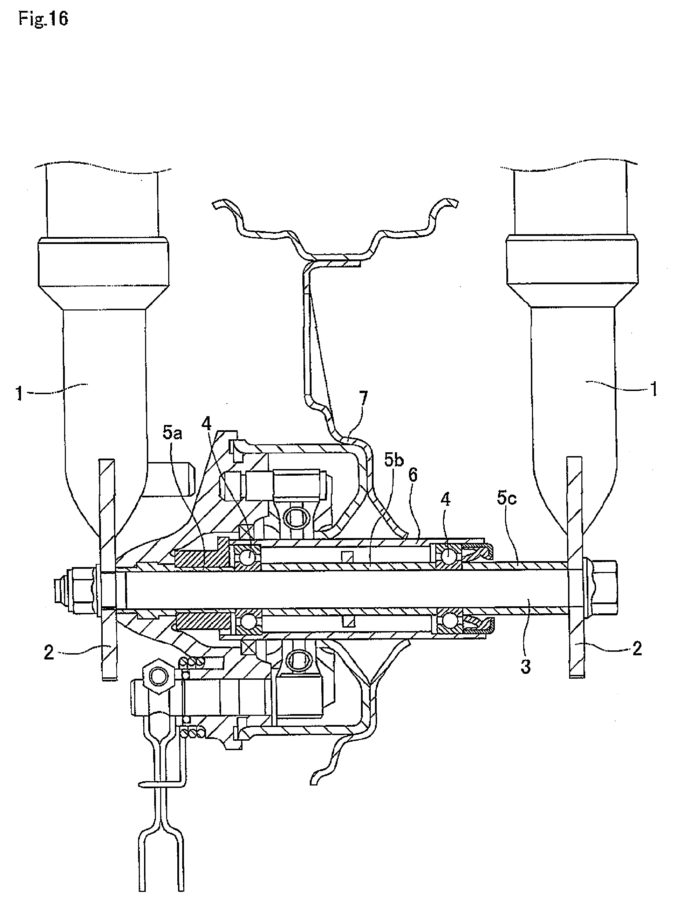

FIG. 16 is a first example of the construction of a wheel-suppotting unit for a motorcycle, and illustrates the construction of the part that supports the front wheel of a relatively small motorcycle such as a scooter In this construction, a pair of support plates 2 is fastened to the bottom end sections of a pair of left and right forks 1 of the suspension such that they are parallel with each other. Both end sections of a support shaft 3 are supported and fastened between both of these support plates 2. A pair of single-row deep groove ball bearings are located at two location in the middle section ofthis support shaft 3 More specifically, the inner rings of these ball bearings 4 fit around the outside of the support shaft 3, and the positions in the axial direction of both of these inner rings are secured by inner ring spacers 5a, 5b, 5c A cylindrical hub 6 is placed around the support shaft 3 such that it is concentric with the support shaft 3 The outer rings of both of the ball bearings 4 fit around the inner surface of the hub 6 in the portions near both ends Furthermore, the wheel 7 is supported and fastened around the outer surface of the hub 6.

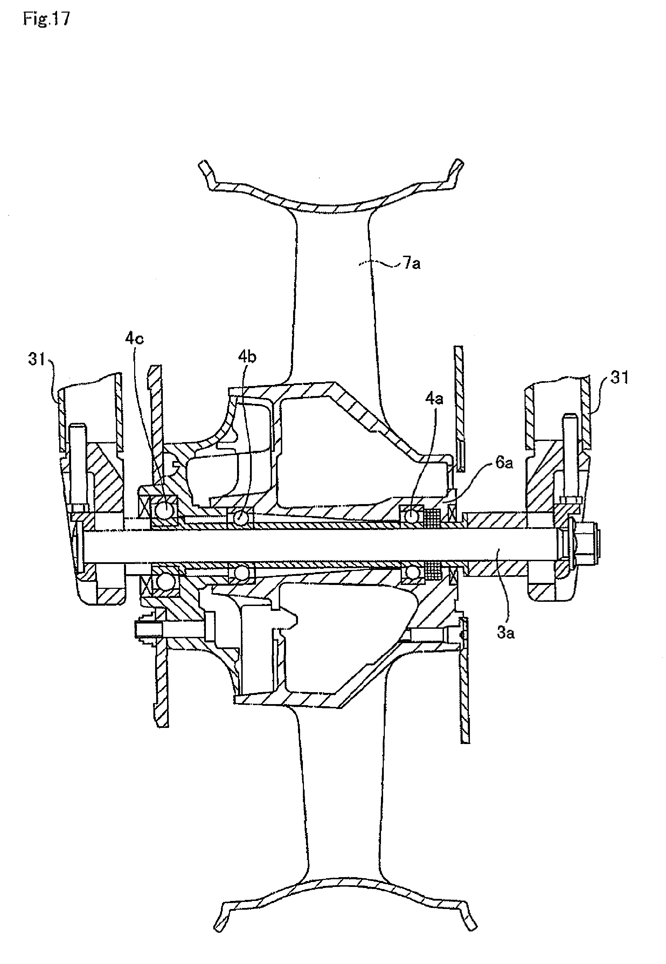

FIG 17 is a second example of construction of a wheel-supporting unit of a motorcycle, and illustrates the construction of the part that supports the rear wheel of a relatively small motorcycle such that the wheel rotates freely In this construction, both end sections of a support shaft 3a are supported and fastened between a pair of arms 31 of the suspension. Three single-row deep groove ball bearings 4a to 4c are located at three locations in the middle section of this support shaft 31, and a hub 6a that is integrated with the wheel 7a is such that it is concentric with the support shaft 3a and rotates freely.

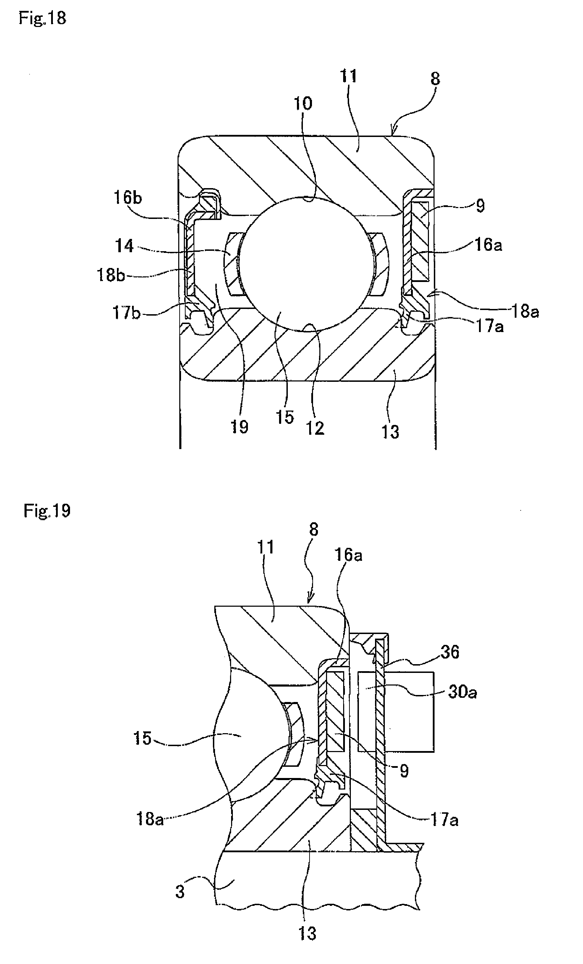

When assembling the ABS in the motorcycle, of the component members of the ball bearings of the wheel-supporting section of the motorcycle as described above, it is feasible to assemble the encoder in a race that rotates together with the wheel 7, 7a, or in other words, in an outer ring, which is a race on the rotating side. FIG. 18 shows an example of a ball bearing with an encoder for rotational speed detection of a wheel for a motorcycle, which is disclosed in JP2007-285514(A). The ball bearing with an encoder having this conventional construction is a combination of a single-row deep-groove ball bearing 8 and a circular ring shaped encoder 9.

The ball bearing 8 has: an outer ring 11 that has a deep groove outer ringway 10 that is formed around its inner surface and that rotates during use, an inner ring 13 that has a deep groove inner ringway 12 that is formed around its outer surface and that does not rotate during use, and a plurality of balls 15 that are held by a retainer 14 and located between the outer ringway 10 and inner ringway 12 such that they can roll freely The openings on both ends of the space inside the bearing between the inner surface of the outer ring 11 and the outer surface of the inner ring 3 where the balls 15 are located are covered by seal rings 18a, 18b that comprise ring-shaped metal cores 16a, 16b and elastic seal lips 17a, 17b. The encoder 9 is attached and fastened to the outside surface of the metal core 16a of one of the seal rings 18a (the right seal ring in FIG. 18)

As illustrated in FIG 19, the support shaft 3 supports a rotation detection sensor 30a of the rotational speed detection device that is combined with the ball bearing with encoder 8. More specifically, the support shaft 3 supports this sensor 30a by way of a ring-shaped holder member 36 The detecting part of this sensor 30a is supported by the portion that faces the detected surface (outside surface in the axial direction) of the encoder 9 that is assembled in the ball bearing 8 with encoder The encoder 9 ofthis example is made of a permanent magnet such as a rubber magnet that is magnetized in the axial direction, with the magnetization direction alternating and changing at uniform intervals in the circumferential direction Therefore, the detected part is arranged on the outside surface in the axial direction of the encoder 9 so that the S pole and N pole alternate at uniform intervals in the circumferential direction This kind of encoder 9 is mounted on and fastened to the outside surface in the axial direction of the metal core 16a of the seal ring 18a such that it is concentric with the metal core 16a The detecting part of the sensor 30a that is supported by the holder member 36 faces the detected surface of the encoder 9 in the axial direction via a suitable detection space

As the motorcycle is moving and the wheel 7 rotates, the seal ring 18a to which the encoder 9 is mounted rotates together with the outer ring 11 that is fastened on the inside of the hub 6 As a result, the S poles and N poles that exist on the detected surface of the encoder 9 alternately pass the portion directly in front of the detecting part of the rotation detection sensor 30a, and the output signal from this sensor 30a changes. The rotational speed of the wheel is found from the period or frequency of change of this output signal.

This kind of ball bearing with encoder is installed between the outer surface of the support shaft 3 and the inner surface of the hub 6 instead of one of the pair of ball bearings (for example, the right ball bearing) that is installed in the construction illustrated in FIG 16 described above, and by having the detecting part of the sensor that is supported by the non-rotating portion face the outside surface of the encoder 9, it is possible to detect the rotational speed of the wheel of a motorcycle.

In the case of the conventional construction illustrated in FIG. 18, the effect of preventing foreign matter from getting inside the internal space of the bearing is not always sufficient In other words, of the seal rings 18a, 18b that cover the openings on both ends of the internal space of the bearing, the seal ring 18a to which the encoder 9 is mounted is often located on the outside end in the axial direction of the support shaft 3 due to the relationship with the installation position of the sensor Therefore, the portion of the seal ring 18a to which the encoder 9 is mounted is easily exposed to foreign matter such as muddy water while the motorcycle is moving In the case of the construction illustrated in FIG. 18, portion where the tip end edge of the seal lip 17a slides along the surface of the inner ring 13 is exposed to the outside space, so it is easy for foreign matter to adhere to this sliding portion, and thus it becomes easy for this foreign matter to pass through this sliding section and get inside internal space of the bearing.

In regards to this, JP2009-168130(A), JP2009-271028(A) and JP2008-107187(A) disclose construction in which of a combined seal ring that comprises a slinger and seal ring, the encoder is mounted and fastened to the outside surface of the rotating circular ring section of the slinger JP2008-107187(A) discloses this kind of construction that can be applied to ABS control of a two-wheeled motor vehicle With construction in which the encoder is installed using the slinger of a combined seal ring, it is possible to prevent the sliding section between the tip end edge of the seal lip and the opposing surface from being exposed to the outside space, and thus it is possible to improve the effect of preventing foreign matter from getting inside the internal space of the bearing. However, JP2009-168130(A), JP2009-271028(A) and JP2008-107187(A) do not disclose detailed construction for rotatably supporting a motorcycle wheel and for making it possible to detect the rotational speed of this wheel

Moreover, an optical type or capacitance type encoder can be used as the encoder 9, however, normally a magnetic encoder is used Nitrile rubber that contains strontium ferrite as a magnetic powder is used as typical elastic magnetic material that is used for a magnetic encoder, and the material is mixed with a roll mill such that the magnetic powder is mechanically oriented. This ferrite type magnetic powder is easily oriented by mechanical sharing between rolls, with the thickness dimension being relatively small and the ability to be formed into a plate high. The strontium ferrite magnetic powder for this mechanical orientation contains a large amount of barium in order to improve the ability to form a plate, and while the residual magnetic flux density (Br) is lower than that of the strontium ferrite magnetic powder for magnetic field orientation, the coercive force (bHc) and the intrinsic coercive force (iHc) are higher than that of the strontium ferrite magnetic powder for magnetic field orientation

However, the wheel-supporting ball bearing for a motorcycle is very compact, so the size of a magnetic encoder that can be used is limited. Therefore, when compared with the magnetic encoder for a four-wheeled motor vehicle, the magnetic encoder comprising a rubber magnet that contains ferrite according to the conventional mechanical orientation method has less magnetic density per pole, so in order to detect rotational speed with good precision, it is necessary to make the gap (air gap) between the sensor and magnetic encoder small, or reduce the number of poles around the circumferential direction of the magnetic encoder; however, making the gap small is limited from the aspect of preventing contact between the sensor and magnetic encoder, and reducing the number of poles has a problem in that the requirement for high resolution of the rotational speed detection device cannot be sufficiently met.

Furthermore, in the case ofa rotational speed detection device for the wheel of a motorcycle, differing from the case of a rotational speed detection device for a four-wheeled motor vehicle, the encoder 9 is not directly fastened to the hub, but is rather supported by way of a race on the rotating side such as the outer ring 11. Consequently, when there is sliding of the area of fit between the hub 6 and the race on the rotating side such as the outer ring 11, or in other words, when creeping occurs, the rotational speed of the hub 6 does not coincide with the rotational speed of the encoder 9, and reliability of detecting the rotational speed of the wheel is lost Therefore, as is disclosed in JP10-82428(A), JP2001-27255(A), JP2005-33999(A), JP09-314695(A), JP2003-287043(A) and JP2007-315585(A), in order to prevent creep between the race of a rolling bearing and the opposing member, a method has been known by which a construction for preventing rotation is provided between the race and the opposing member However, using the construction disclosed in these patent literatures for preventing this kind of creep in order to improve the reliability of rotational speed detection of a wheel of a motorcycle was not considered in the past.

### [Related Literature]

### [Patent Literature]

Patent Literature 1: JP2006-105341(A)
Patent Literature 2: JP2007-139075(A)
Patent Literature 3: JP2007-211840(A)
Patent Literature 4: JP2007-285514(A)
Patent Literature 5: JP2009-229157(A)
Patent Literature 6: JP2009-168130(A)
Patent Literature 7: JP2009-271028(A)
Patent Literature 8: JP2008-107187(A)
Patent Literature 9: JP10-82428(A)
Patent Literature 10: JP2001-27255(A)
Patent Literature 11: JP2005-33999(A)
Patent Literature 12: JP09-314695(A)
Patent Literature 13: JP2003-287043(A)
Patent Literature 14: JP2007-315585(A)

### SUMMARY OF THE INVENTION

### [Problems to be Solved by the Invention]

In consideration of the situation described above, the object of the present invention is to provide a compact ball bearing with a rotational speed detection encoder that, together with being able to support the wheels of a motorcycle (two-wheeled vehicle) and detect the rotational speed of the wheels, is able to prevent grease inside the internal space of the ball bearing from leaking out, and conversely, is able to prevent foreign matter in the surrounding outside space from getting inside this internal space.

Moreover, when the encoder is a magnetic encoder, another object of the present invention is to provide a ball bearing with rotational speed detection encoder that, while being compact, detects the rotational speed of the wheels of a motorcycle with high precision without reducing the number of poles in the circumferential direction of the magnetic encoder.

Furthermore, another object of the present invention is to provide construction that makes it possible to prevent the rotating side ring on which the encoder is mounted from rotating (creeping) relative to the opposing member that fits with and supports this rotating side ring, and to improve the reliability of the rotational speed detection of the wheels of a motorcycle.

### [Means of Solving the Problems]

The ball bearing with a rotational speed detection encoder for a motorcycle of the present invention, as in a conventionally know ball bearing with a rotational speed detection encoder for a motorcycle, including the construction disclosed in JP2006-105341(A), JP2007-139075(A), JP2007-211840(A) and JP2007-285314(A), is a single-row deep groove ball bearing comprising an outer ring, an inner ring and a plurality of balls.

The outer ring has a single-row deep groove outer-raceway formed around the middle section in the axial direction of the inner circumferential surface thereof. The inner ring has a single-row deep groove inner-raceway formed around the middle section in the axial direction of the outer circumferential surface. The plurality of balls are located between the outer-raceway and the inner-raceway and held by a retainer so as to be able to roll freely. In this ball bearing, one of the outer ring and the inner ring corresponds to a rotating side ring that is fitted and fastened to a rotating side member that rotates together with a wheel of a motorcycle, and the other of the outer ring and the inner ring corresponds to a stationary side ring that is fitted and fastened to a stationary side member that does not rotate.

The encoder is a ring shaped member, and the properties of the outside surface in the axial direction, which is a detected surface, alternate and change at uniform intervals in the circumferential direction The encoder is fastened to one of the inner and outer circumferential surfaces of the rotating side ring that corresponds to a circumferential surface on the rotating side that faces the stationary side ring.

The ball bearing with rotational speed detection encoder of the present invention comprises a combined seal ring, having a slinger and seal ring, that covers the space between the inner circumferential surface on one end section of the outer ring and the outer circumferential surface of one end section of the inner ring. The encoder is fastened to the circumferential surface on the rotating side by supporting and fastening the encoder to the slinger.

Preferably, the slinger is formed by bending a metal plate into an ring shape, having a cylindrical section on the rotating side that is fitted and fastened to the circumferential surface of the rotating side, and a circular ring section on the rotating side that is bent at a right angle from the edge of the outer end in the axial direction of the cylindrical section on the rotating side toward the stationary side ring

Moreover, the seal ring comprises a metal core and seal lips The metal core is formed by bending a metal plate into a ring shape, having a cylindrical section on the stationary side that is fitted and fastened to one of the inner and outer circumferential surfaces of the stationary side ring that corresponds to a circumferential surface on the stationary side that faces the circumferential surface on the rotating side, and a circular ring section on the rotating side that is bent at a right angle from the edge of the inside end in the axial direction of the cylindrical section on the stationary side toward the rotating side ring. The seal lips are made of an elastic material, having a base end section that is connected and fastened all around the metal core, and edges on the tip ends that come in sliding contact all the way around part of the slinger.

In this case, the encoder is mounted on and fastened all the way around the outside surface in the axial direction of the circular ring section on the rotating side

More preferably, the space between the inner circumferential surface on the other end of the outer ring and the outer circumferential surface on the other end of the inner ring is covered by a second seal ring that comprises a second metal core and second seal lips that are fastened to the base end section of the second metal core

On the other hand, the encoder is a plastic magnet having magnetic powder mixed in synthetic resin, and together with the plastic magnet being magnetized in the axial direction, the magnetization direction alternates and changes at uniform intervals in the circumferential direction, with alternating S poles and N placed at uniform intervals on the outside surface in the axial direction, which is the detected surface of the encoder

In this case, the plastic magnet of the encoder comprises magnetic powder and a binder that is obtained by adding an impact resistance improving agent to a polyamide resin

The rotational speed detection apparatus for a wheel of a motorcycle of the present invention comprises: a center axis member that is concentric with the wheel; an outer diameter side member that is provided around the center axis member and is concentric with the center axis member; a ball bearing with rotational speed detection encoder that is provided between the outer circumference of the center axis member and the inner circumferential surface of the outer diameter side member; and a rotation detection sensor that is supported by and fastened to part of one of the center axis member and the outer diameter side member that corresponds to the stationary side member that does not rotate, so that the rotation detection sensor faces the outside surface in the axial direction of the encoder of the ball bearing with rotational speed detection encoder, the rotation detection sensor outputting a signal that changes according to the rotation of the encoder Preferably, the ball bearing with rotational speed detection encoder of the present invention is used as this ball bearing with rotational speed detection encoder

The outer ring of the ball bearing with rotational speed detection encoder is fitted and fastened inside the outer diameter side member, and the inner ring of the ball bearing is fitted and fastened around the center axis member. One of the outer ring and the inner ring corresponds to the rotating side ring that is fitted to one of the center axis member and the outer diameter side member that corresponds to the rotating side member that rotates together with the wheel The other race corresponds to the stationary side ring that is fitted to the stationary side member that does not rotate

In the ball bearing with rotational speed detection encoder of the present invention, a rotation restraining member is provided on one of the inner and outer circumferential surfaces of the rotating side ring that corresponds to the circumferential surface of the engaging side that engages with one of the center axis member and outer diameter side member that corresponds to the rotating side member, and due to the engagement between the rotation restraining member and the circumferential surface of the rotating side member, the rotation of the rotating side ring with respect to the rotating side member is prevented.

In the aspect in which the rotation restraining member is provided, a fastening concave groove is formed all the way around the circumferential surface on the engaging side of the rotating side ring; as the rotation restraining member, an O-ring may be used that has the diameter of the cross-sectional shape in the free state being greater than the depth of the fastening groove and is mounted in the fastening concave groove; and in the state where the rotating side ring is engaged with the rotating side member, the rotation of the rotating side ring with respect to the rotating side member is prevented by elastically pressing the O-ring between the bottom surface of the fastening groove and the circumferential surface of the rotating side member

Alternatively, an eccentric groove is formed around the circumferential surface on the engaging side such that the center of the bottom surface of the eccentric groove is eccentric with respect to the center of the circumferential surface of the engaging side and the depth gradually changes in the circumferential direction, and a retaining ring having an broken annular ring shape with a convex section located in the middle section in the circumferential direction that protrudes in the radial direction can be used as the rotation retaining member, and this retaining ring is mounted in the eccentric groove In this case, as the convex section of the retaining ring has frictional engagement with the circumferential surface of the rotating side member, the end section in the circumferential direction of the retaining ring is wedged between the bottom surface of the eccentric groove and the circumferential surface of the rotating side member, preventing the rotating side ring from rotating with respect to the rotating side member.

Furthermore, a fastening groove is formed in the axial direction on circumferential surface of the rotating side member, and a fastening pin that protrudes in the radial direction from the circumferential surface on the engaging side can be used as the rotation retaining member In this case, the engaging pin engages with a fastening groove that is formed in the axial direction in the circumferential surface of the rotating side member, preventing the rotating side ring from rotating with respect to the rotating side member.

Moreover, a fastening groove can be formed around the circumferential surface on the engaging side, and a fiiction ring made of synthetic resin can be mounted in the fastening groove as the rotation restraining member. In this construction as well, the rotating side ring can be prevented from rotating with respect to the rotating side member.

### [Effect of the Invention]

The ball bearing with rotational speed detection encoder of the present invention, constructed as described above, supports the wheel of a motorcycle so that the wheel can rotate freely, and makes it possible to detect the rotational speed of that wheel, as well as sufficiently improves the effect of preventing foreign matter from getting into the internal space of the bearing.

Moreover, by covering the space between the inner circumferential surface on the other end section of the outer ring and the outer circumferential surface on the other end section of the inner ring with a typical seal ring, it is possible to effectively prevent grease that is in the internal space inside the bearing from flowing out from the internal space inside the bearing.

Furthermore, by using an encoder having alternating S-poles and N-poles arranged at uniform intervals around the outside surface in the axial direction, which is the detected surface, it is possible to improve the detection capability (reliability related to the detection of the changing characteristics of the detected surface), and thus it is possible to maintain reliability of detection of the rotational speed of the wheel.

In the case of using a magnetic encoder as the encoder, by using a plastic magnet made using magnetic powder and plastic, it is possible to improve the magnetic characteristics over the case of using a rubber magnet. As a result, it is possible to form many poles in the circumferential direction of the magnetic encoder, and it becomes possible to detect the rotational speed of the wheel with high precision

By providing a rotation retaining member on the circumferential surface on the engaging side of the rotating side ring that engages with the rotating side member, it is possible to prevent the rotating side ring to which the encoder is mounted from relative rotation (creep) with respect to the rotating side member, which is the opposing member that fits with and supports this rotating side ring, and thus it is possible to improve the reliability of the detection of the rotational speed of a wheel of a motorcycle

### BRIEF DESCRIPTION OF THE DRAWINGS

FIG 1 is a cross-sectional view of the major parts of a first embodiment of the present invention.
FIG. 2 is a cross-sectional view of the major parts of a second embodiment of the present invention
FIG. 3 is a cross-sectional view of the major parts of a third embodiment of the present invention, and is for explaining a ball bearing with magnetic rotational speed detection encoder for detecting the rotational speed of the wheels of a motorcycle.
FIG 4 is a perspective view illustrating an example of the magnetic pattern of the magnetic encoder that is provided in the ball bearing with magnetic encoder illustrated in FIG 3.
FIG 5 is a cioss-sectional view of the major parts of a fourth embodiment of the present invention
FIG. 6 is a cross-sectional view of the major parts of a fifth embodiment of the present invention
FIG 7 is a cross-sectional view of the major parts of a sixth embodiment of the present invention
FIG 8 is a cross-sectional view of the major parts of a seventh embodiment of the present invention.
FIG. 9 is a cross-sectional view of the major parts of an eighth embodiment of the present invention
FIG. 10 is a schematic diagram illustrating the relationship between an eccentric groove that is formed around the outer circumferential surface of the outer ring, and a retaining ring that fits inside this eccentric groove
FIG 11 is a cross-sectional view of the major parts of a ninth embodiment of the present invention
FIG 12 is an end view of a ball bearing with a fastening pin supported on the outer circumference of the outer ring
FIG. 13 is a cross-sectional view of the major parts of a tenth embodiment of the present invention.
FIG 14 is a cross-sectional view of the major parts of an eleventh embodiment of the present invention
FIG 15 is a cross-sectional view of the major parts of a twelfth embodiment of the present invention.
FIG. 16 is a cross-sectional view illustrating a first example of the construction of a rotation supporting unit for the wheel of a motorcycle
FIG 17 is a cross-sectional view illustrating a second example of the construction of a rotation supporting unit for the wheel of a motorcycle
FIG 18 is a partial cross-sectional view illustrating an example of a conventionally known ball bearing with encoder
FIG. 19 is a cross-sectional view of an example of a conventionally known ball bearing with encoder, and illustrates the state of constructing a rotational speed detection apparatus that is combined with a rotational speed sensor.

### BEST MODES FOR CARRYING OUI THE INVENTION

### [Embodiment 1]

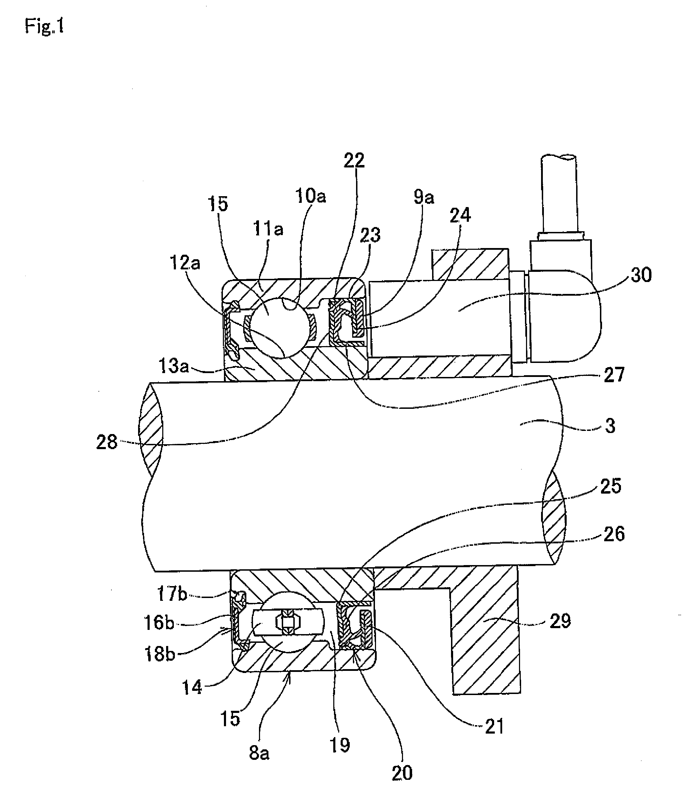

FIG 1 illustrates a first embodiment of the present invention. This example, as in the first embodiment of conventional construction illustrated in FIG 16, relates to the construction of an outer ring rotating type ball bearing that supports the wheel 7 such that it rotates freely around a non-rotating support shaft 3 . In the ball bearing with rotational speed detection encoder for a motorcycle of this embodiment, an opening on one end (right end in FIG. 1) of the internal space 19 inside a single-row deep groove ball bearing 8a is covered by a combined seal ring 20, and a plastic magnet ring-shaped encoder 9a is mounted and fastened all the way around the slinger 21 of this combined seal ring 20 In the present invention, the one end of the ends of the internal space 19 of the bearing is the side that faces the outer space, and the other end is the side that does not face the outer space, or more specifically, is the side that faces the space on the inner diameter side of the hub 6 (see FIG 16),

The ball bearing 8a has an outer ring 11a, which is the rotating side ring, an inner ring 13a, which is the stationary side ring, and a plurality of balls 15 . The outer ring 11 a has a single-row deep groove outer-raceway 10a that is formed around the middle section in the axial direction of the inner circumferential surface thereof Moreover, the inner ring 13a has a single-row deep groove inner-raceway 12a that is formed around the middle section in the axial direction of the outer circumferential surface thereof Furthermore, the balls 15 are located between the outer-raceway 10a and the inner-raceway 12a, and held by a retainer 14 such that they can roll freely Together with fitting and fastening the inner ring 13a around the support shaft 3 with an interference fit, the outer ring 11a is fastened on the inside of the hub 6 (see FIG 16), which is located in the center of the wheel 7, with an interference fit, so that the wheel 7 is supported around the support shaft such that it can rotate freely.

A pair of ball bearings that are separated in the axial direction are provided between the outer circumferential surface of the support shaft 3 and the inner circumferential surface of the hub 6, and a contact angle for back-to-back arrangement is applied to these ball bearings One of these ball bearings (the bearing on the right side in FIG 16, for example) is a ball bearing with rotational speed detection encoder that comprises the encoder 9a of the present invention, and the other ball bearing (the bearing on the left side in FIG 16, for example) is a typical ball bearing (no encoder is installed) However, also in this typical ball bearing, the seal ring on the outside in the axial direction (the seal ring on the left side in FIG 16, for example) of the seal rings that cover the openings on both ends of the internal space inside the bearing is preferably constructed of' a combined seal ring that has excellent sealing characteristics such as resistance to dirty water

Of the openings on both ends of the internal space 19 inside the bearing of the ball bearing 8a with rotational speed detection decoder as described above, the opening on the one end that faces the external space during operation is covered by a combined seal ring 20, and the other end (left end in FIG 1) is covered by a typical seal ring 18b as in the case of the conventional construction.

The combined seal ring 20 comprises a slinger 21 and a seal ring 22. The slinger 21 is formed into a circular ring shape around the entire circumference with an L-shaped cross section by bending a magnetic metal plate such as mild steel plate, martensite or ferrite stainless steel plate or the like, In this embodiment, this slinger 21 is fastened inside the inner circumferential surface of the end section of the outer ring 11a, which is the rotating circumferential surface In order for this, this slinger 21 comprises an outer-diameter side cylindrical section 23, which is a rotating cylindrical section, and an outside circular ring section 24, which is bent inward in the radial direction at a right angle from the edge of the outside end in the axial direction of this outer-diameter side cylindrical section 23, and is a totaling circular ring section The outside end is the end section of this cylindrical section that is on the external space side in the axial direction of the ball bearing 8a

Moreover, the seal ring 22 comprises a metal core 25 and seal lips 26 The metal core 25 is formed into a circular ring shape around the entire circumference with an L-shaped cross section by bending a metal plate, and comprises an innei-diametei side cylindrical section 27, which is a stationary cylindrical section, that is fitted and fastened around the outer circumferential surface of the end section of the inner ring 13a, which is a stationary circumferential surface, with an interference fit, and an inside circular ring section 28, which is bent at a right angle outward in the radial direction from the edge on the inside end in the axial direction of this inner-diameter side cylindrical section 27, and is a stationary circular ring section The seal lips 26 are made of an elastic material such as an elastomer that contains rubber, and the base end section thereof is connected and fastened around the entire circumference to the metal core 25, and the edges of the tip ends thereof come in sliding contact around the entire circumference with part of the slinger 21. In the example in the figures, the edges of the tip ends at three locations of the seal lips 26 come in sliding contact with inner circumferential surface of the outer-diameter side cylindrical section 23 and the inside surface of the outside circular ring section 24

The encoder 9a is mounted on and fastened to the outside surface of the outside circular ring section 24 of the slinger 21 of the combined seal ring 20 described above. It is possible to adopt various encoders as the encoder 9a depending on the type of sensors with which the encoder 9a is combined; for example, a magnetic encoder, an optical encoder, a capacitance encoder and the like can be used. Typically a magnetic encoder is used, and in this embodiment as well, a magnetic encoder is used In a magnetic encoder for detecting the rotational speed of a wheel of a four-wheeled vehicle, as was described above, a rubber magnet that contains ferrite that uses strontium ferrite magnetic powder particularly for mechanical alignment is used. In the present invention, it is also possible to use this kind of ferrite containing rubber magnet, however, as will be described in detail in the third embodiment, preferably a plastic magnet in which the magnetic powder above is mixed in synthetic resin is used.

The magnetic encoder is magnetized in the axial direction, however, by alternating the magnetization direction at uniform intervals in the circumferential direction, the characteristics of the outside surface in the axial direction, which is the surface to be detected, is similarly changed in the circumferential direction. More specifically, S poles and N poles on the outside surface in the axial direction, which is surface of the encoder 9a to be detected, are alternated at uniform intervals.

Moreover, by also covering the space between the inner circumferential surface on the other end of the outer ring, and the outer circumferential surface of the other end of the inner ring with a normal seal ring, it is possible to effectively prevent the grease that is inside the internal space of the bearing from flowing out from the internal space of the bearing.

The seal ring 18b that covers the opening on the other end of the internal space 19 of the ball bearing 8 with rotational speed detection encoder faces the space on the inner diameter side of' the hub 6 (see FIG 16) and does not face the outside space, so the installation thereof is arbitrary. However, by covering the space between the inner surface on the other end of the outer ring 11a and the outer surface of the other end of the inner ring 13a with this seal ring 18b, it is possible to effectively preventing the grease that is inside the internal space 19 of the bearing from leaking out from there This seal ring 18b comprises a second ring shaped metal core that is fastened to the end section of the inner circumferential surface of the outer ring 11a, which is a rotating surface, and seal lips, the base end of which is fastened to the second metal core, and the tip ends of which come in sliding contact around the entire surface of the outer circumferential surface of the inner ring 13a, which is a stationary surface.

The ball bearing 8a with rotational speed detection encoder for the wheel of a motorcycle of the embodiment above, as was described above, supports the wheel 7 such that the wheel can rotate freely around a non-rotating support shaft 3. Moreover a sensor holder 29 fits around the portion in the middle of the support shaft 3 that is adjacent to the ball bearing 8a, and the detection unit of a sensor 30 that is held in this sensor holder 29 faces in the axial direction the outside surface in the axial direction of the encoder 9a through a detection space of about 0 5 to 2 mm. In this state, as the encoder 9a rotates together with the wheel 7, the output signal from the sensor 30 changes at a frequency that is proportional to the rotational speed of the wheel 7. Therefore, by transmitting this output signal to a controller (not illustrated in the figure), the rotational speed of the wheel 7 can be found

### [Embodiment 2]

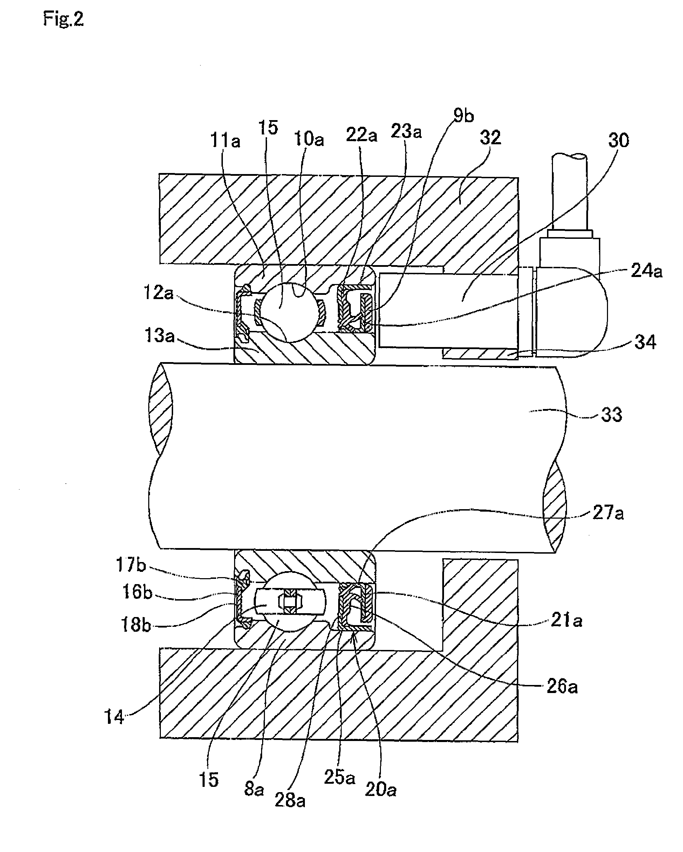

FIG 2 illustrates a second embodiment of the present invention. In this embodiment, the case of applying the present invention to the construction of a rotating inner ring type ball bearing in which a rotating shaft 33 is supported on the inner diameter side of a bearing housing 32 is described. In order to achieve the construction of a rotating inner ring type of bearing using a ball bearing 8a having the same construction, in this embodiment, the slinger 21a of the combined seal ring 20a is fitted and fastened around the outer circumferential surface of the inner ring 13a with an interference fit Moreover, the metal core 25a of the seal ring 22a is fitted and fastened around the inner circumferential surface of the end section of the outer ring 11a. Therefore, in the construction of this embodiment, an outer-diameter side cylindrical section 23a is provided for the metal core 25a, and an inner-diameter side cylindrical section 27a is provided for the slinger 21a. As far as the construction of the combined seal ring 20a is concerned, except for the point that the installation location of each part has changed as the bearing is changed from a rotating outer ring type bearing to a rotating inner ring type bearing, the construction is the same as that in the first embodiment described above, so any redundant explanation will be omitted

The encoder 9b is mounted on and fastened to the entire outside surface of the outside circular ring section 24 of the slinger 21a The sensor 30 is supported by a support flange 34 that is formed on the bearing housing 32

### [Embodiment 3]

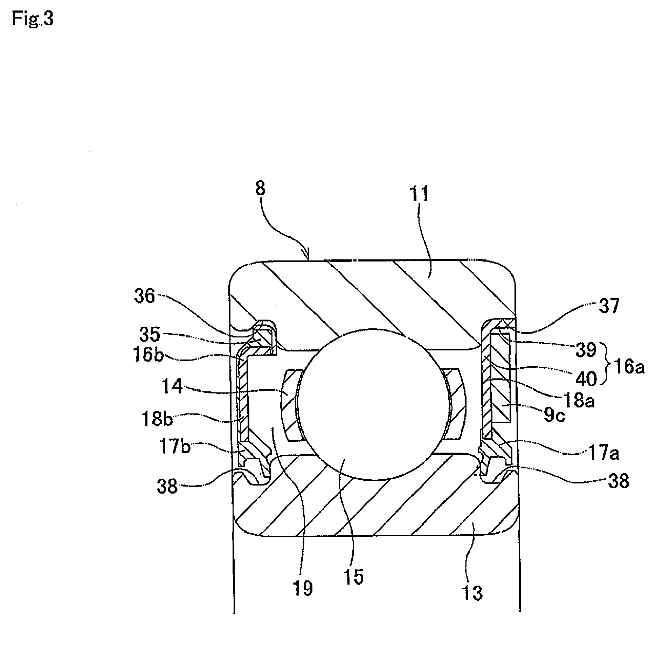

FIG 3 illustrates a third embodiment of the present invention. Basically, the construction of this embodiment is the same as the conventional construction illustrated in FIG 18, so the following explanation will concentrate on the construction and structure of the encoder 9c, which is the feature of this third embodiment, and an explanation of the other basic construction will be omitted However, it is also possible to apply the encoder 9c of this embodiment to the construction described in the first and second embodiments.

The seal ring 18b is formed into a ring shape by covering a metal core 16b as a reinforcement member with an elastic member 35. A seal fastening groove 36 is formed in the inner circumferential surface on the end section in the axial direction of the outer ring 11, and by utilizing the elasticity of the elastic member to fit the outer circumferential section of the seal ring 18b around this seal fastening groove 36, the seal ring 18b is fastened to the outer ring 11 Moreover, a seal groove 38 is formed in the outer circumferential surface on both end sections in the axial direction of the inner ring 13, and the seal lips 17b that are formed around the inner circumferential section of the seal ring 18b come in sliding contact with this seal groove 38.

On the other hand, the seal ring 18a with magnetic encoder comprises an outer-diameter circumferential edge section 39 that fitted in a stepped section 37 that is formed around the inner circumferential surface of the other end section in the axial direction of the outer ring 11, a metal core 16a having a ring shaped plate section 40, seal lips 17a that come in sliding contact with the seal groove 38 that is formed around the outer circumferential surface of the end section in the axial direction of the inner ring 13, and a magnetic encoder 9c that is mounted on and fastened to the outside surface of the ring shaped plate section 40.

Preferably, a magnetic material such as a ferrite stainless steel (SUS430 or the like), or martensite stainless steel (SUS410 or the like) whose magnetic properties of the magnetic material do not decrease, and from the aspect of operating conditions, can withstand corrosion at a certain level or greater, is used as the material of the metal core 16a

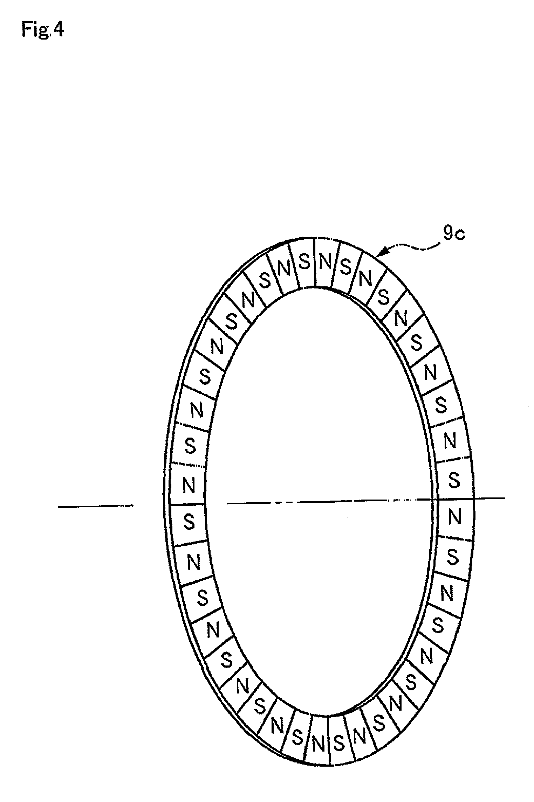

The feature of this embodiment is that a plastic magnet in which magnetic power is mixed with synthetic resin is used as the magnetic encoder 9c. As illustrated in FIG 4, this magnetic encoder 9c is a ring shape member wherein the N poles and S poles are arranged such that they are continuously alternated in the circumferential direction, and this magnetic encoder 9c is attached to the surface of the ring shaped plate section 40 of the metal core 16a that faces outward in the axial direction

The sensor (not illustrated in the figure) detects the rotation of the outer ring 11 by detecting the magnetic pulse of the fluctuation in magnetic flux density that occurs on the detected surface of the magnetic encoder 9c that rotates together with the outer ring 11. This detected rotational speed information can be suitably used for braking control by calculating the deviation of the detected rotational speed information from rotational speed information that is predetermined by an ABS apparatus, for example. As long as the sensor is attached to a stationary side member (non-rotating side member), it can be used to form a unit together with the ball bearing 8 with this magnetic encoder.

Mounting and fastening the magnetic encoder 9c to the metal core 16a is performed by first using the metal core 16a, to which adhesive is burned and applied beforehand, as a core and inserting a magnetic material When doing this, preferably a disk gate type injection molding machine is used. By putting the molten magnetic material that has been spread into a disk shape, in the die for the portion that will be the thick section of the inner diameter, the ramentum shaped magnetic powder that is contained inside is oriented parallel to the surface Moreover, during formation, when magnetic field is applied to the die in the thickness direction (magnetic field formation), anisotropy becomes close to perfect. On the other hand, even when magnetic field formation is performed, in the case of side gate, when the viscosity of the molten magnetic material that is gradually becoming solidified is in the process of increasing, it is difficult to make the orientation in weld sections completely anisotropic, and thus, together with the magnetic field characteristics dropping, there is a possibility of cracking occurring in the weld sections with decreased mechanical strength when used over a long period of time, so is not preferred

After the magnetic material has been filled into the die in this way, while being cooled in the die, demagnetization is performed using a magnetic field that is in the opposite direction as the magnetization direction Next, after removing the gate section and allowing the adhesive to completely harden, an oil condenser type demagnetization machine is used to further perform demagnetization to a magnetic flux density of 2mT or less, or more preferably to a magnetic flux density of 1mT or less

Next, gate cutting is performed, and in order to completely harden the adhesive, heating is performed at a fixed temperature and fixed amount of time in a constant temperature oven. In some cases, it is possible to perform heating over a short period of time at a high temperature, such as by using high frequency heating

After that, the material is overlaid onto a magnetized yoke such that there is multi-pole magnetization in the circumferential direction (see FIG 4), and the magentic encoder is obtained

Taking into consideration magnetic properties and weather resistance, ferrite magnetic powder such as strontium ferrite, barium ferrite and the like, or rare-earth magnetic powder such samarium-iran-nitride, samarium-cobalt, neodymium-iron-boron and the like can be suitably used as the magnetic powder of the magnetic material, and these magnetic powders can be used alone, or a plurality of kinds can be used in combination. When strong magnetic properties (exceeding a BHmax of 2.0 MGOe) are required, rare-earth magnetic powder is used, and when weaker magnetic properties will suffice (BHmax of 1.6 to 2.0 MGOe), also taking into consideration cost, preferably a ferrite magnetic powder is used as the major component. The amount of magnetic powder that is contained in the magnetic material differs according to the type of magnetic powder used, however, as long as the amount is within the range of '70 to 92 mass%, there is no problem for practical use

A binder is made by adding an impact resistance improving agent to a polyamide resin. A polyamide resin is a resin having excellent resistance to fatigue and to heat, and is effective in improving the resistance to thermal shock of a magnetic section. The impact resistance improving agent is an elastic material having the function of lessening vibration and shock, and in the present invention, a resin or rubber material such as illustrated below can be suitably used.

A modified polyamide resin can be used as the impact resistance improving agent. This modified polyamide resin is a block copolymer having a hard segment comprising a polyamide resin, and a soft segment comprising at least one of a polyester component and a polyether component, where a modified polyamide resin having polyamide 6, polyamide 11, polyamide 12 and the like as hard segment are known as commercial products.

Powder made from styrene-butadiene rubber, acrylic rubber, acrylonitrile butadiene rubber, carboxyl modified acrylonitrile butadiene rubber, silicon rubber, chloroprene rubber, hydrogenated nitrile rubber; carboxyl modified hydrogenated nitrile rubber, carboxyl modified styrene-butadiene rubber is preferred as the rubber material, where these can be used alone, or a plurality of kinds can be used in combination.

Ethylene propylene non-conjugated diene rubber (EPDM), maleic anhydride modified ethylene propylene non-conjugated diene rubber (EPDM), ethylene/acrylate copolymer, ionomer and the like can be used as the impact resistance improving agents.

The amount that these impact resistance improving agents are added is preferably 5 to 50 mass % of the total amount of polyamide resin, and more preferably 10 to 40 mass % When the amount added is less than5 mass %, the amount is too small and there is little effect for improving the impact resistance, so is not preferred When the amount added exceeds 50 mass %, the relative amount of polyamide resin become small, and the ultimate tensile strength decreases, so the practicability decreases

A phenolic resin adhesive, epoxy resin adhesive and the like that can be diluted with solvent and whose hardening reaction advances in nearly two stages is preferred as the adhesive which is to be burned and applied to the metal core 16a These adhesives have the advantage of' having excellent heat resistance, chemical resistance, and ease of handling

Above, an example is shown where the attachment and fixation of the magnetic encoder 9c to the metal core 16a is performed by shaping the magnetic material using the metal core 16a as a core by insert molding and then by performing the multi-pole magnetization, however, it is also possible to form the metal core 16a and the magnetic encoder 9c as separate members, and then join the metal core 16a and the magnetic encoder 9c with adhesive and perform multi-pole magnetization,

By using this kind of plastic magnet comprising magnetic powder and plastic, it is possible to fill the magnet with a larger amount of magnetic powder than in a rubber magnet, so it is possible to improve the magnetic properties As a result, it becomes possible to form a large number of' poles in the circumferential direction of the magnetic encoder

### [Embodiment 4]

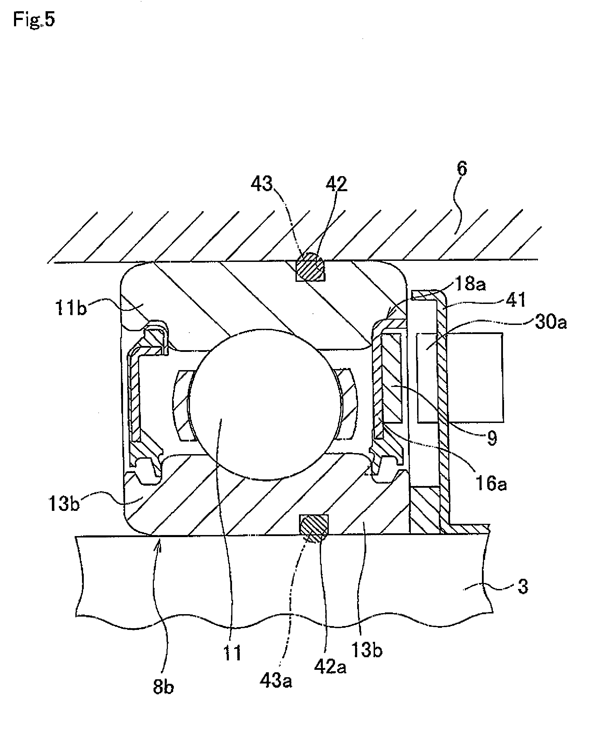

FIG 5 illustrates a fourth embodiment of the present invention A fastening concave groove 42 is formed all the way around the outer circumferential surface of the outer ring 11b, which is a rotating side ring An O-ring 43 is mounted in this fastening groove 42. This O-ring 43 is such that the cross-sectional diameter in the free state illustrated in FIG. 5 is larger than the depth of the fastening concave groove 42 Therefor, with the outer ring 11b in the state before being fitted inside the hub 6, the end section on the outer diameter side of the O-ring 43 protrudes further outward in the radial direction than the outer circumferential surface of the outer ring 11b. Therefore, when the outer ring 11b is fitted inside the hub 6 with an interference fit, the O-ring 43 is elastically pressed between the bottom surface of the fastening groove 42 and the inner circumferential surface of the hub 6 In this state, a large friction force acts between this bottom surface and inner circumferential surface and both the inner and outer circumferential surfaces of the O-ring 43 Consequently, even when the interference of the interference fit between the hub 6 and the outer ring 11b decreases or disappears, the outer ring 11b on which the encoder 9 is mounted does not rotate (creep) relative to the hub 6 that rotates together with the wheel As a result, the rotational speed of the wheel and the encoder 9 perfectly coincide, and the reliability of detecting the rotational speed of the wheels of a motorcycle can be improved.

Furthermore, in this embodiment, a fastening concave groove 42a is also formed in the inner circumferential surface of the inner ring 13b, and an O-ring 43a is also mounted inside that fastening groove 42a When the inner ring 13b is fitted around and fastened to the support shaft 3 with an interference fit, this O-ring 43a is elastically pressed between the outer circumferential surface of the support shaft 3 and the bottom surface of the fastening groove 42a.

In the construction of this embodiment, the O-ring 43 prevents the outer ring 11b (and the encoder 9 that is fastened to and supported by the outer ring 11b) from rotating relative to the hub 6, and also both of the O-rings 43, 43a maintain a seal between the inner circumferential surface of the hub 6 and the outer circumferential surface of the outer ring 11b, and the inner circumferential surface of the inner ring 13b and the outer circumferential surface of the support shaft 3

The construction and function of the other parts is nearly the same as in the conventional construction illustrated and described in FIGS. 16 to 19, so any redundant explanation is omitted.

### [Embodiment 5]

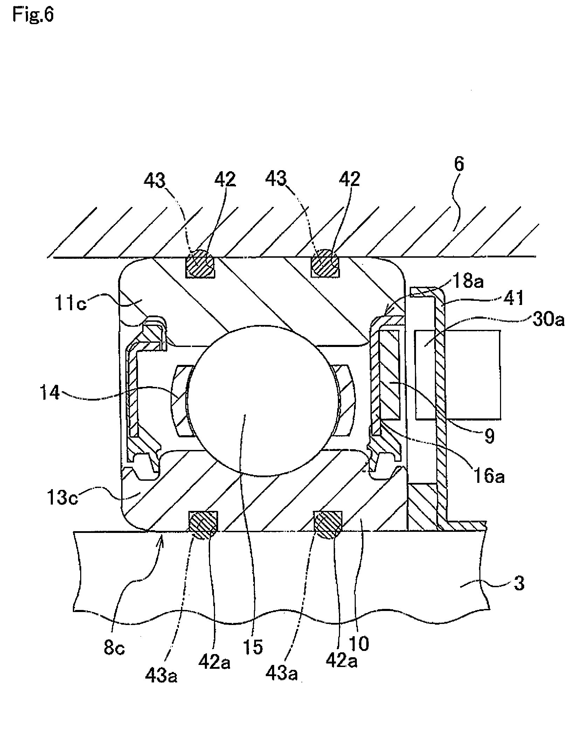

FIG. 6 illustrates a fifth embodiment of the present invention In this embodiment, two fastening concave grooves 42 are formed around the outer circumferential surface of the outer ring 11c, two fastening concave grooves 42a are formed around the inner circumferential surface of the inner ring 13c, and O-rings 43, 43a are respectively mounted in these fastening concave grooves 42, 42a. With the construction of this embodiment, when compared with the fourth embodiment described above, the effect of preventing creep by the outer ring 11c with respect to the hub 6 is improved, and the seal between the inner circumferential surface of the hub 6 and the outer circumferential surface of the outer ring 11c, and the seal between the inner circumferential surface of the inner ring 13c and the outer circumferential surface of the support shaft 3 can be maintained more sufficiently.

### [Embodiment 6]

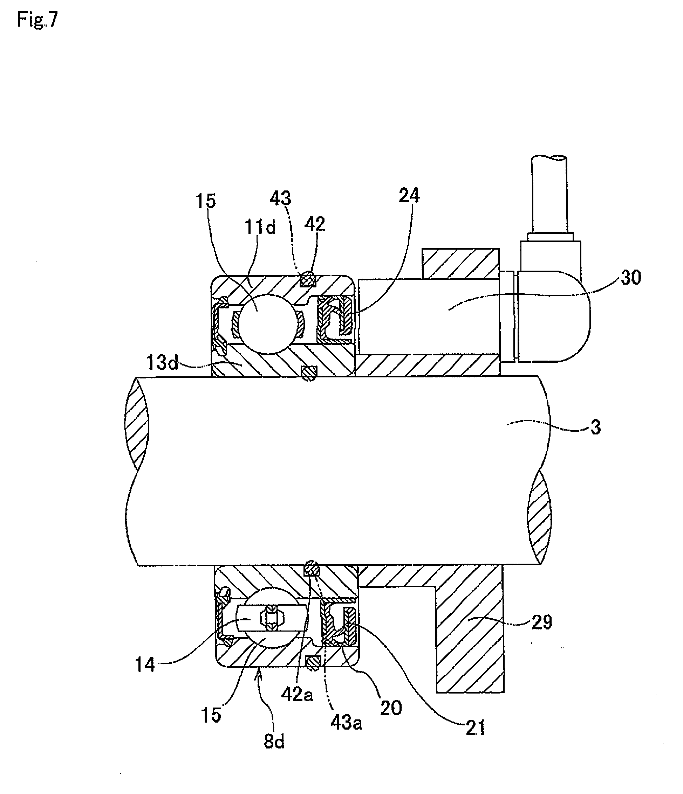

FIG. 7 illustrates a sixth embodiment of the present invention. In this embodiment, fastening concave grooves 42, 42a are respectively formed around the outer circumferential surface of the outer ring 11d and the inner circumferential surface of the inner ring 13d in the construction of the first embodiment, and O-rings 43, 43a are respectively mounted in these fastening concave grooves 42, 42a.

### [Embodiment 7]

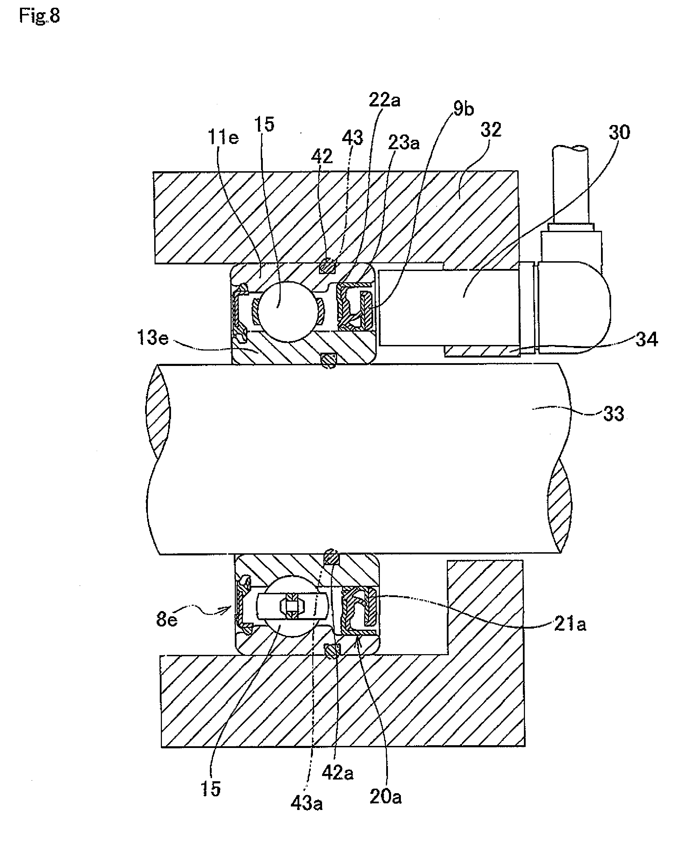

FIG. 8 illustrates a seventh embodiment of the present invention. In this embodiment, fastening concave grooves 42, 42a are respectively formed around the outer circumferential surface of the outer ring 11e and the inner circumferential surface of the inner ring 13e in the construction of the second embodiment, and O-rings 43, 43a are respectively mounted in these fastening concave grooves 42, 42a

### [Embodiment 8]

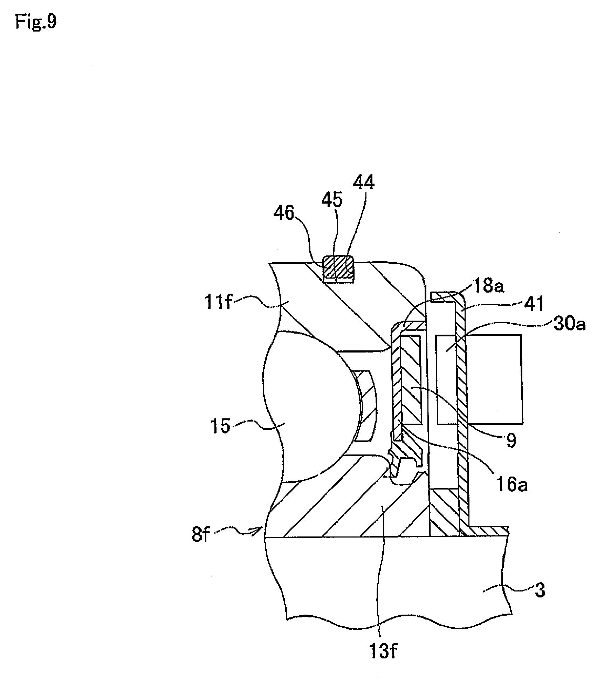

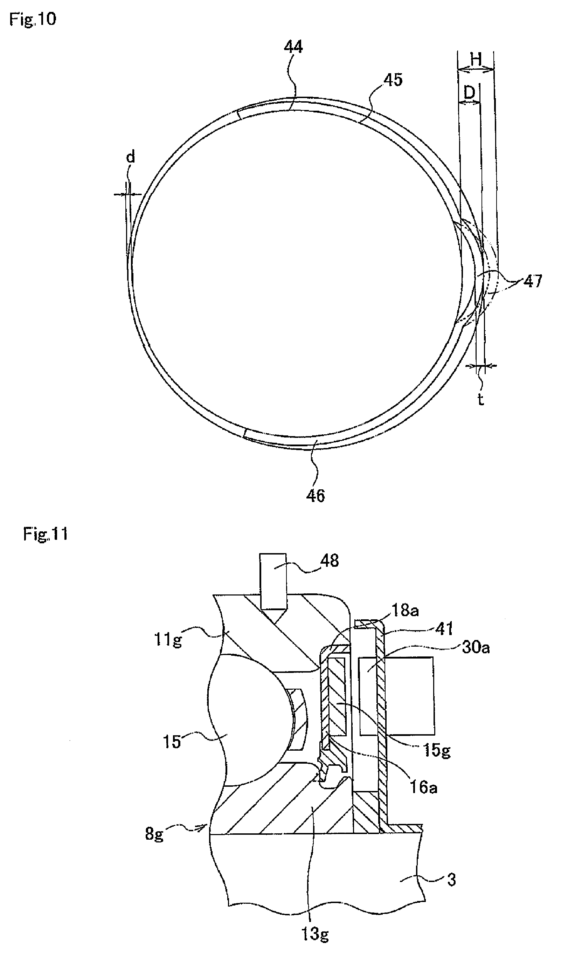

FIGS 9 and 10 illustrate an eighth embodiment of the present invention An eccentric groove 44 is formed around the outer circumferential surface of the outer ring 11f; which is a rotating side ring, and this eccentric groove 44 is such that the center of the bottom surface 45 is eccentric with respect to the center of the outer circumferential surface of the outer ring 11f, and such that the depth gradually changes in the circumferential direction. A retaining ring 46 is mounted in the eccentric groove 44. This retaining ring 46 is obtained by bending a wire material such as stainless spring steel having a rectangular cross section, and has a C shape that is a little larger than a semicircle (the center angle is a little greater than 180 degrees) The thickness t of the wire material in the radial direction is greater than the depth d of shallowest portion of the eccentric groove 44, and is less than the depth D of the deepest portion (d < t < D), Moreover, the center section in the circumferential direction of this retaining ring 46 is bent with a curvature that is larger than other portions, and an elastic convex section 47 that protrudes outward in the radial direction is formed in that portion. The height H from the inner circumferential surface of the retaining ring 46 to the peak in the free state ofthis elastic convex section 47 that is illustrated by dot-dash line in FIG. 10 is greater than the depth D of the deepest portion of the eccentric groove 44 (H > D)

When fitting and fastening the outer ring 11f inside the hub 6 (see FIG. 16), first st the retaining ring 46 is mounted in the eccentric groove 44, and the elastic convex section 47 is positioned at the deepest portion of the eccentric groove 44 Then as illustrated by the solid line in FIG 10, while pressing the elastic convex section 47 inward in the radial direction such that the peak of this elastic convex section 47 does not protrude outward in the radial direction from the outer circumferential surface of the outer ring 11f, the outer ring 11f is fitted inside the hub 6 with an interference fit. In the fitted state, the peak of this elastic convex section 47 comes in elastic contact with the inner circumferential surface of the hub 6. In this state, this elastic convex section 47 presses both of the inner circumferential surface of the hub 6 and the bottom surface 45 of the eccentric groove 44, and a large friction force due to this pressing force prevents the outer ring 11f from rotating with respect to the hub 6 Furthermore, when there is a tendency for this outer ring 11t to rotate with respect to the hub 6 against this pressing force, the end section in the circumferential direction of the retaining ring 46 displaces to the shallowest portion of the eccentric groove 44 and wedges in between the bottom surface 45 of the eccentric groove 44 and the inner circumferential shape of the hub 6. As a result, an extremely large friction force acts at the area of contact between the bottom surface 45 and the inner circumferential surface of the hub 6 and both the inner and outer circumferential surfaces of the end section in the circumferential direction of the retaining ring 46, and absolutely prevents the outer ring 11 f from rotating with respect to the hub 6

In the example in the figure, the thickness in the radial direction of the retaining ring 46 is constant around the circumferential direction. However, it is also possible to use an eccentric ring such as disclosed in JP10-82428(A) wherein the center axis of the outer circumferential surface and the center axis of the inner circumferential surface are eccentric, and the thickness in the radial direction is the greatest in the center section in the circumferential direction, and becomes small going toward both end sections in the circumferential direction. The amount of eccentricity of this kind of eccentric ring can be made to nearly coincide with the amount of eccentricity of the outer circumferential surface of the outer ring 11f and the bottom surface 45 of the eccentric groove 44, or to be a little less By using this eccentric ring, the wedge action when there is a tendency for the outer ring 11f to rotate with respect to the hub 6 is large, and the effect of preventing relative rotation (creep) between the outer ring 11f and the hub 6 becomes even larger

### [Embodiment 9]

FIGS 11 to 12 illustrate a ninth embodiment of the present invention In this embodiment, a fastening pin 48 is supported on the outer circumferential surface of the outer ring 11g such that the pin protrudes outward in the radial direction from this outer circumferential surface In order for this, a spring pin is pressure fitted into a concave hole that is formed in part of the circumferential surface of the outer ring 11g. On the other hand, a fastening groove (not illustrated in the figure) is formed in the axial direction on the inner circumferential surface of the hub 6 (see FIG 16) into which the outer ring 11g is to be fitted, such that the fastening groove is open toward the end surface in the axial direction of the hub 6. As the outer ring 11g is fitted inside the hub 6 with an interference fit, the fastening pin 48 engages with the fastening groove As a result, the outer ring 11g is prevented from rotating with respect to the hub 6

### [Embodiment 10]

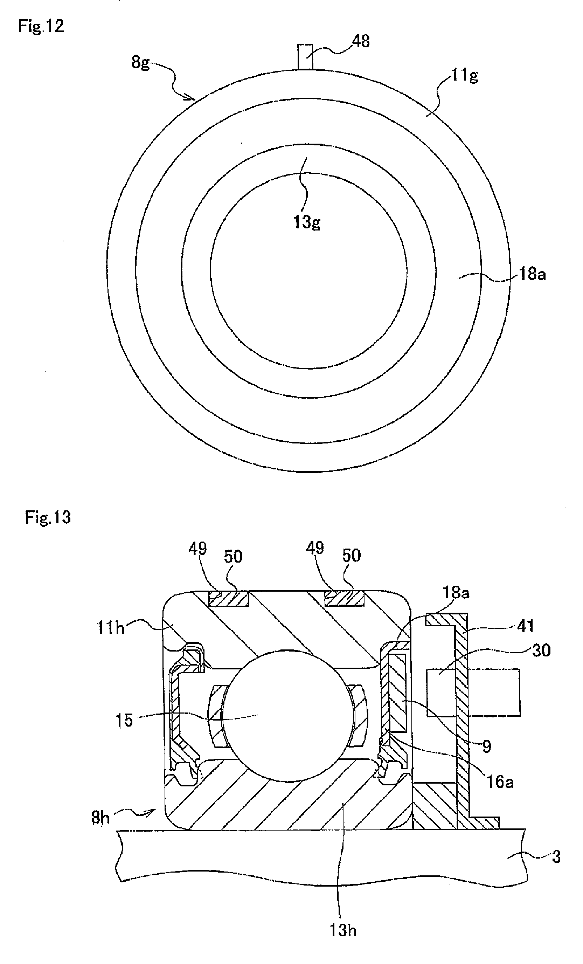

FIG. 13 illustrates a tenth embodiment of the present invention In this embodiment, fastening grooves 49 are formed at two locations in the axial direction of the outer circumferential surface of the outer ring 11h, and fiiction rings 50 that are each made of synthetic resin are mounted in both of these fastening grooves 49 Both of these friction rings 50 have a rectangular cross-sectional shape and are formed into a ring shape around the entire circumference, having a break at one location in the circumferential direction so that the friction rings 50 can be mounted in both of the fastening grooves 49. With both of these friction rings 50 mounted in both of the fastening grooves 49, the outer circumferential surfaces of these friction rings 50 and the outer circumferential surface of the outer ring 11h are located on a single cylindrical surface, or the surfaces of the rings 50 protrude outward a little more than the outer circumferential surface of the outer ring 11h

The linear expansion coefficient of both of the friction rings 50, which are each made of synthetic resin are greater than the linear expansion coefficient of the ferrous alloy or aluminum of the hub 6 (see FIG. 16) into which the outer ring 11h fits Therefore, as the temperature rises, both of the friction rings 50 thermally expand mole than the outer ring 11h and the hub 6, and both the inner and outer circumferential surfaces of both of the friction rings 50 are strongly pressed by the bottom surfaces of both fastening grooves 49 and the inner circumferential surface of the hub 6 As a result, a large friction force acts between these surfaces, and the outer ring 11h is prevented from rotating relative to the hub 6.

### [Embodiment 11]

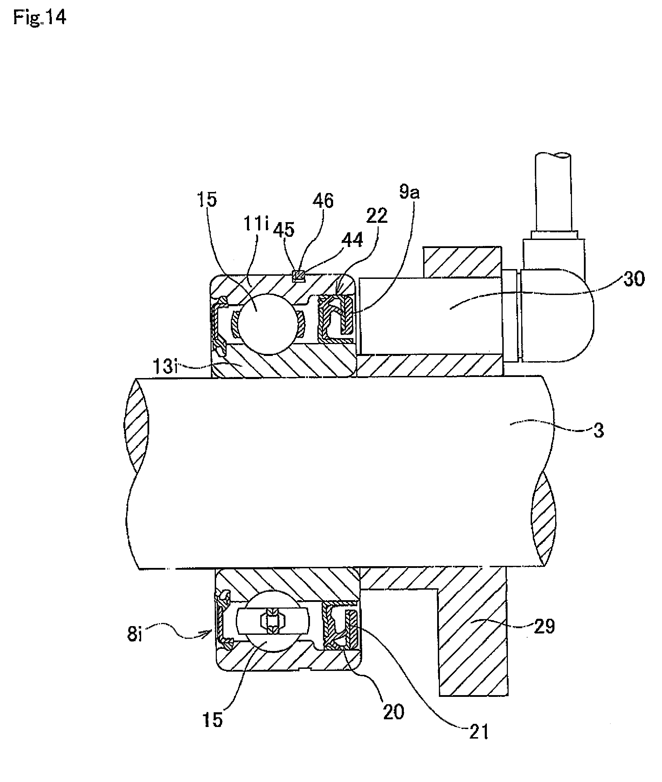

FIG. 14 illustrates an eleventh embodiment of the present invention. In this embodiment, the construction of the eighth embodiment, wherein an eccentric groove 44 is formed around the outer circumferential surface of the outer ring 11 i and a retaining ring 46 is mounted in this eccentric groove 44, is applied to the construction of the first embodiment

### [Embodiment 12]

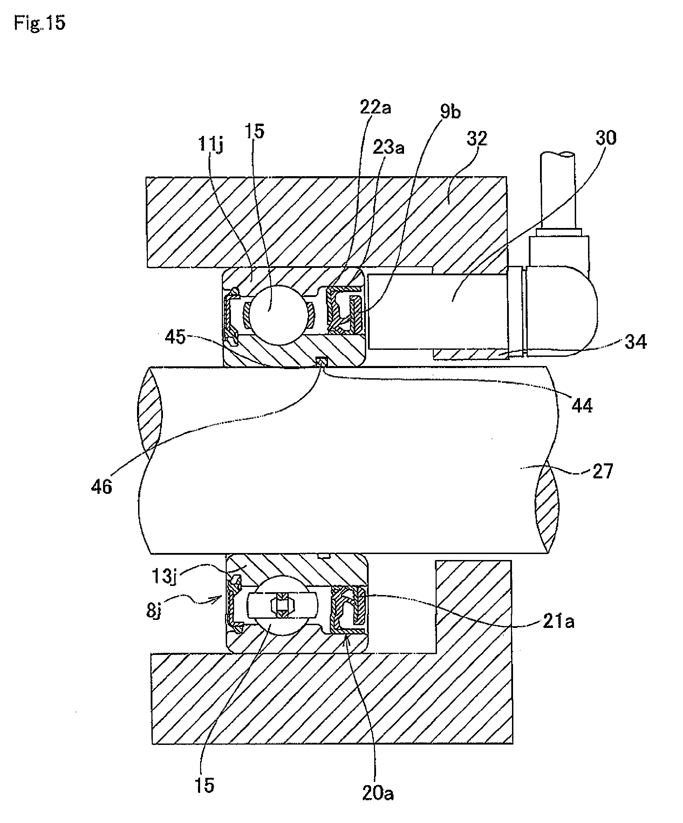

FIG. 15 illustrates a twelfth embodiment of the present invention In this embodiment, the construction of the eighth embodiment, wherein an eccentric groove 44 is formed around the inner circumferential surface of the inner ring 13j and a retaining ring 46 is mounted in this eccentric groove 44, is applied to the construction of the second embodiment.

### [Explanation of Reference Numbers]

- 1: Fork
- 2: Support plate
- 3, 3a: Support shaft
- 4, 4a, 4b, 4c: Ball bearing
- 5a, 5b, 5c: Inner ring spacer
- 6, 6a: Hub
- 7, 7a: Wheel
- 8, 8a, 8b, 8c, 8d, 8e, 8f_{,} 8g, 8h, 8i, 8j: Ball bearing with encoder
- 9, 9a, 9b, 9c: Encoder
- 10, 10a: Outer-raceway
- 11, 11a, 11b, 11c, 11d, 11e, 11f, 11g, 11g, 11i, 11j: Outer ring
- 12, 12a: Inner-raceway
- 13, 13a, 13b, 13c, 13d, 13e, 13f, 13g, 13h, 13i, 13j: Inner ring
- 14: Retainer
- 15: Ball
- 16a, 16b: Metal core
- 17a, 17b: Seal lips
- 18a, 18b: Seal ring
- 19: Space inside the bearing
- 20, 20a: Combined seal ring
- 21, 21a: Slinger
- 22, 22a: Seal ring
- 23, 23a: Outer-diameter side cylindrical section
- 24, 24a: Outside circular ring section
- 25, 25a: Metal core
- 26, 26a: Seal lips
- 27, 27a: Inner-diameter side cylindrical section
- 28, 28a: Inside circular ring section
- 29: Sensor holder
- 30, 30a: Sensor
- 31: Arm
- 32: Bearing housing
- 33: Rotating shaft
- 34: Support flange
- 35: Elastic member
- 36: Seal fastening groove
- 37: Stepped section
- 38: Seal groove
- 39: Outer-diameter circumferential edge section
- 40: Ring shaped plate section
- 41: Holder member
- 42: Fastening concave groove
- 43: O-ring
- 44: Eccentric groove
- 45: Bottom surface
- 46: Retaining ring
- 47: Elastic convex section
- 48: Fastening pin
- 49: Fastening groove
- 50: Friction ring

## Claims

1. A ball bearing with a rotational speed detection encoder for a motorcycle, comprising:
a single-row deep groove ball bearing comprising an outer ring having a single-row deep groove outer-raceway formed around the middle section in the axial direction of the inner circumferential surface thereof, an inner ring having a single-row deep groove inner-raceway formed around the middle section in the axial direction of the outer circumferential surface and a plurality of balls that are located between the outer-raceway and the inner-raceway and held by a retainer so as to be able to roll freely, with one of the outer ring and the inner ring being fitted and fastened to a member on the rotating side that rotates together with the wheel of a motorcycle, and the other being fitted and fastened to a stationary side member that does not rotate;
an encoder fastened to one of the inner and outer circumferential surfaces of the rotating side ring that corresponds to a circumferential surface on the rotating side that faces the stationary side ring, the properties on the outside surface thereof which corresponds to a detected surface, alternating at uniform intervals in the circumferential direction; and
a combined seal ring, having a slinger and a seal ring, that covers the space between the inner circumferential surface on one end section of the outer ring and the outer circumferential surface of one end section of the inner ring,
the encoder being fastened to the circumferential surface on the rotating side by supporting and fastening the encoder to the slinger

2. The ball bearing with rotational speed detection encoder for the wheel of a motorcycle according to claim 1, wherein
the slinger is formed by bending a metal plate into an ring shape, having a cylindrical section on the rotating side that is fitted and fastened to the circumferential surface of the rotating side, and a circular ring section on the rotating side that is bent at a right angle from the edge of the outer end in the axial direction of the cylindrical section on the rotating side toward the race on the stationary side;
the seal ring comprises a metal core and seal lips;
the metal core is formed by bending a metal plate into a ring shape, having a cylindrical section on the stationary side that is fitted and fastened to one of the inner and outer circumferential surfaces of the stationary side ring that corresponds to a circumferential surface on the stationary side that faces the circumferential surface on the rotating side, and a circular ring section on the rotating side that is bent at a right angle from the edge of the inside end in the axial direction of the cylindrical section on the stationary side toward the rotating side ring;
the seal lips are made of an elastic material, having a base end section that is connected and fastened all around the metal core, and edges on the tip ends that come in sliding contact all the way around part of the slinger; and
the encoder is mounted on and fastened all the way around the outside surface in the axial direction of the circular ring section on the rotating side.

3. The ball bearing with rotational speed detection encoder for the wheel of a motorcycle according to claim 1, wherein the space between the inner circumferential surface on the other end of the outer ring and the outer circumferential surface on the other end of the inner ring is covered by a second seal ring that comprises a second metal core and second seal lips that are fastened to the base end section of the second metal core

4. The ball bearing with rotational speed detection encoder for the wheel of a motorcycle according to claim 1, wherein the encoder is a plastic magnet having magnetic powder mixed in synthetic resin, and together with the plastic magnet being magnetized in the axial direction, the magnetization direction alternates and changes at uniform intervals in the circumferential direction, with alternating S poles and N placed at uniform intervals on the outside surface in the axial direction, which is the detected surface of the encoder.

5. The ball bear ing with rotational speed detection encoder for the wheel of a motorcycle according to claim 4, wherein the encoder is a plastic magnet comprising magnetic powder and a binder that is obtained by adding an impact resistance improving agent to a polyamide resin

6. A rotational speed detection apparatus for a wheel of a motorcycle, comprising:
a center axis member that is concentric with the wheel;
an outer diameter side member that is provided around the center axis member and is concentric with the center axis member;
a ball bearing with rotational speed detection encoder according to claim 1 that is provided between the outer circumference of the center axis member and the inner circumferential surface of the outer diameter side member;
a rotation detection sensor that is supported by and fastened to part of one of the center axis member and the outer diameter side member that corresponds to the stationary side member that does not rotate, so that the rotation detection sensor faces the outside surface in the axial direction of the encoder of the ball bearing with rotational speed detection encoder, the rotation detection sensor outputting a signal that changes according to the rotation of the encoder; and
a rotation restraining member provided on one of the inner and outer circumferential surfaces of the rotating side ring that corresponds to the circumferential surface of the engaging side that engages with one of the center axis member and outer diameter side member that corresponds to the rotating side member, and due to the engagement between the rotation restraining member and the circumferential surface of the rotating side member, the rotation of the rotating side ring with respect to the rotating side member being prevented.

7. The rotational speed detection apparatus for a wheel of a motorcycle according to claim 6, wherein
a fastening concave groove is formed all the way around the circumferential surface on the engaging side of the rotating side ring;
an O-ring is used as the rotation restraining member that has the diameter of the cross-sectional shape in the free state being greater than the depth of the fastening groove and is mounted in the fastening concave groove; and
in the state where the rotating side ring is engaged with the rotating side member, the rotation of the rotating side ring with respect to the rotating side member is prevented by elastically pressing the O-ring between the bottom surface of the fastening groove and the circumferential surface of the rotating side member.

8. The rotational speed detection apparatus for a wheel of a motorcycle according to claim 6, wherein
an eccentric groove is formed around the circumferential surface on the engaging side such that the center of the bottom surface of the concentric groove is eccentric with respect to the center of the circumferential surface of the engaging side and the depth gradually changes in the circumferential direction;
a retaining ring having an broken annular ring shape with a convex section located in the middle section in the circumferential direction that protrudes in the radial direction is as the rotation retaining member; the retaining ring being mounted in the eccentric groove; and
as the convex section of the retaining ring has frictional engagement with the circumferential surface of the rotating side member, the end section in the circumferential direction of the retaining ring is wedged between the bottom surface of the eccentric groove and the circumferential surface of the rotating side member, preventing the rotating side ring from rotating with respect to the rotating side member.

9. The rotational speed detection apparatus for a wheel of a motorcycle according to claim 6, wherein
a fastening pin is supported by the circumferential surface on the engaging side such that the pin protrudes in the radial direction from the circumferential surface on the engaging side; and
a fastening groove is formed in the axial direction in the circumferential surface of the rotating side member;
the engaging pin engages with the fastening groove, preventing the rotating side ring from rotating with respect to the rotating side member.

10. The rotational speed detection apparatus for a wheel of a motorcycle according to claim 6, wherein
a fastening groove is formed around the circumferential surface on the engaging side; and
a friction ring made of synthetic resin is mounted in the fastening groove
